# EUROPEAN PATENT APPLICATION

(11) **EP 4 571 074 A1**
(43) Date of publication of application: **18.06.2025**
(21) Application number: 23383295.5
(22) Date of filing: 14.12.2023
(51) Int. Cl.: F02C 6/20, B64D 29/00, F02C 7/04

(54) **NACELLE FOR TURBO-PROPELLER ENGINES**

(71) Applicant: Airbus Defence and Space, S.A.U., 28022 Madrid (ES)
(72) Inventor: LUNA GARCÍA, Plácido, E-28022 Madrid (ES); IBAÑEZ COLAS, Vicente, E-28022 Madrid (ES)
(74) Representative: ABG Intellectual Property Law, S.L.

(57) **Abstract**

The present invention belongs to the field of aircraft engines, and particularly, it belongs to the technical field of nacelle architecture of turbo-propeller engines. In particular, an object of the present invention is to provide an improved engine air intake of a nacelle for a turbo-propeller engine of an aircraft.

## Description

### FIELD OF THE INVENTION

The present invention belongs to the field of aircraft engines, and particularly, it belongs to the nacelle architecture for turbo-propeller engines. More particularly, an object of the present invention is to provide an improved engine air intake of a nacelle for a turbo-propeller engine of an aircraft.

### PRIOR ART

Existing aircrafts typically include one or more primary engines for propulsion, which may vary depending on the intended flight regime of the aircraft. For instance, turbo-propeller or turboprop engines, that is, a variant of an aeronautical engine that has been optimized to drive a propeller, are designed to flight at subsonic speed.

Particularly, aircrafts mounting turboprop engines are of special interest at flight regime of lower flight speed, at which they become very efficient in terms of burning less fuel and requiring significantly less runway for takeoff and landing in comparison with a turbojet or turbofan powered aircraft of the same size. These advantages make turboprop engines relevant to be used over relatively short distances being a common choice for most commuter aircrafts, in which cost and performance benefits offset the abovementioned lower speed.

It is known in the art that the key of the operation of a turbo-propeller engine is that it requires a great amount of air and said airflow needs to be directed from the ambient to the engine compressor airflow inlet. That's the air intake which allows the accomplishment of this specific function. Despite the air intake is part of the engine, it is usually not provided by the engine manufacturer but by the aircraft manufacturer, as well as other equipment installed inside the nacelle and surrounding the engine.

The classical concept for turbo-propeller engine air intakes is composed by an inlet duct oriented stream-wise capturing the air from that particular direction. The inlet duct directs the airflow in the optimum conditions towards the engine compressor airflow inlet, feeding the turbomachinery. The air intake is usually connected directly to the compressor airflow inlet but some engines also require an additional compartment located in-between the air intake and the compressor airflow inlet.

Nevertheless, these classical solutions known in the art present some disadvantages. Firstly, the weight of the turbo propellers sits at around 5% of the power plant total weight which includes the cowls, the engine and the rest of elements located inside the nacelle. Moreover, the installation of classical concepts of air intake requires a space allocation inside the nacelle which increases the cross-section and wet area of the nacelle itself and results in an increase of the drag.

Besides, due to its stream wise orientation, classical concepts of the state of the art are structurally designed to withstand eventual bird strike impacts and water and ice impact directly on the air intake, requiring additional anti-icing systems which also involve a loss of performances for the aircraft due to the energy necessary for these additional systems to operate.

Also, classical nacelle concepts normally require an Inertial Particle Separator located afterwards for responding to the above mentioned limitations such as avoiding particles (ice, sand, dust, birds, etc.) entering the engine compressor. Besides the weight, drag, costing and complexity that the previously mentioned features add, they also require dedicated expensive testing mainly for preventing bird impact and implement anti-icing capabilities.

Therefore, there is a need in the art for an improved nacelle architecture which provides a solution to the above mentioned drawbacks.

### DESCRIPTION OF THE INVENTION

The present invention provides a nacelle for a turbo-propeller engine of an aircraft according to claim 1 and an aircraft according to claim 13. In dependent claims, preferred embodiments of the invention are defined.

*In a first inventive aspect, the present invention provides a nacelle for a turbo-propeller engine of an aircraft, the nacelle comprising:*
*a front section,*
*a middle section, and*
*a rear section,*
   *these sections of the nacelle being arranged coaxially to a longitudinal axis X-X' coinciding with a centerline of the turbo-propeller engine when installed in the nacelle; wherein*
*the middle section of the nacelle comprises at least one air intake so that the at least one air intake is coincident to a compressor section of the turbo-propeller engine when installed in the nacelle;*
*the at least one air intake defines a channel comprising a channel inlet and a channel outlet, the channel inlet being on the outermost part of the middle section and the channel outlet being on the inside of the middle section; and*
*the at least one air intake is configured for capturing and channeling airflow from the outside of the nacelle towards the compressor section of the turbo-propeller engine.*

The present invention applies to an improved nacelle architecture for a turbo-propeller engine, in particular, to an improved air intake configuration which allows feeding the compressor section of the turbo-propeller engine. Also, the present invention provides a lighter nacelle with respect to the nacelle architecture known in the art by, for example, reducing the cross-section area of the nacelle, reducing the wet area of said nacelle and increasing the drag.

With respect to the concepts known in the art, the present invention allows, for example, to avoid implementing an additional anti-icing system, which are known as high demanding in energy, and results in an additional reduction of the weight of the nacelle but also involves higher performances due to the overall energy saving.

In particular, nacelles of the state of the art, which normally include anti-ice systems, comprise a set of ducts and normally require bleed air to function at its optimal capacity. Nevertheless, said bleed air deteriorates the turbo-propeller engine performances because of the air extraction necessary when the anti-ice system is enabled. Additionally, the anti-ice system also influences the safety in-flight because icing conditions shall be avoided in case of loss of the overall aircraft system. Therefore, since the present nacelle configuration does not require anti-ice system and, thus, reduces energy consumption of an aircraft. Additionally, the present nacelle configuration also provides a solution for improving overall in-flight conditions for an aircraft.

The nacelle of the first inventive aspect provides a nacelle comprising a front section, a middle section and a rear section. All these sections of the nacelle are arranged one after the other and coaxially with respect to a longitudinal axis X-X'. Specifically, this longitudinal axis X-X' corresponds to the centerline of the turbo-propeller engine when installed in the nacelle. In addition, when the engine is installed in the nacelle, the middle section of the nacelle is the part of the nacelle corresponding at least to the location of the compressor section of the engine. Said middle section comprises at least one air intake located on the outermost part of the middle section of the nacelle and the at least one air intake defines a channel inlet and a channel outlet.

The channel inlet of the at least one air intake is disposed on the outermost part of the middle section of the nacelle and the channel outlet of each air intake is disposed on the inside of the middle section of the nacelle. That is, the at least one air intake provide a fluidic communication between the outside of the nacelle and the compressor section of the turbo-propeller engine when installed in the nacelle.

In other words, the at least one air intake, more particularly the channel inlet of the at least one air intake, is configured for capturing the airflow from the outside. Also, the channel inlet and the channel outlet forms a path or a conduct which helps channeling the airflow captured from the outside of the nacelle towards the compressor section of the turbo-propeller engine.

In an embodiment, the length of the channel defined by the channel inlet and the channel outlet is equal to the thickness of the nacelle.

In an embodiment, the length of the channel defined by the channel inlet and the channel outlet is greater that the thickness of the nacelle. In this embodiment, the channel defined by the air intake protrudes towards the inside of the nacelle, i.e. goes beyond the thickness of the nacelle towards the inside of the nacelle.

Common turbo-propeller engines comprise a single air intake, a reduction gearbox, a compressor, a combustion chamber, a turbine and a propelling nozzle. Airflow enters the air intake of the nacelle and is compressed by the compressor in order to increase the pressure and temperature of the airflow. Then fuel is further added to the compressed air and flowed towards the combustion chamber where the mixture of air and fuel is ignited.

According to the present invention, the at least one air intake provides direct feeding of airflow to the compressor section of the turbo-propeller engine, in particular, as close as possible to the compressor airflow inlet of the compressor. That is, thanks to the disposition and location of the at least one air intake at the middle section of the nacelle, the proximity between the at least one air intake and the compressor section contributes to provide a solution with advantages and benefits as the ones above mentioned.

In other words, the nacelle architecture of the present invention helps feeding airflow from the outside of the nacelle to the compressor section of the turbo-propeller engine. That is, the airflow captured from the outside is directly discharged inside the compressor section.

Advantageously, the at least one air intake is disposed flush with respect to the outermost of the middle section of the nacelle which helps providing an aerodynamic profile to the overall nacelle and helps with the drag increase allowed by the improved architecture of the present invention.

Additionally, the solution provided by the present invention helps saving space inside the nacelle with respect to the nacelle know in the art, which also make possible an optimization of the cowls size, resulting in saving additional drag, cost and more weight.

In an embodiment, *the at least one air intake is distributed coaxially to the longitudinal axis X-X' along the middle section.*

In an embodiment, *the nacelle comprises a top portion and a bottom portion, and wherein the at least one air intake is distributed along the top portion of the nacelle or the bottom portion of the nacelle or along the top and bottom portion of the nacelle.*

When in operating conditions, that is when the nacelle of the invention is mounted on an aircraft, the top portion of the nacelle is the portion located on the upper part of the nacelle with respect to a horizontal plane containing the longitudinal axis X-X'. On the contrary, the bottom portion of the nacelle is the portion located on the lower part of the nacelle with respect to a horizontal plane containing the longitudinal axis X-X'.

In an embodiment, the at least one air intake is a single air intake as an elongated inlet or slot with a substantially rectangular form, which extends along a portion of the middle section. In an embodiment, this single air intake is circumferentially extended relative to the longitudinal axis X-X'.

In an embodiment, *the nacelle comprises a plurality of air intakes.*

Advantageously, and contrary to the single air intake location of nacelles of the art which require that the airflow comes from one specific direction, mostly at the front section of the nacelle, the single air intake or the plurality of air intakes of the nacelle of the present invention are placed circumferentially and provokes a radial airflow which results in a more homogeneous and further improved distribution of said airflow inside the compressor section. Thus, during flight conditions, the distortion levels of the airflow provided at the compressor airflow inlet of the compressor decrease and are more effectively managed.

In an embodiment, the nacelle comprises a first air intake elongated and with a substantially rectangular form, this first air intake being extended along a portion of the middle section, preferably along a top portion of the nacelle.

In an embodiment, the nacelle further comprises one or more second air intakes smaller than the first air intake, these second air intakes being located on a portion of the middle section, preferably on a bottom portion of the nacelle.

In an embodiment, the plurality of air intakes is distributed in one array coaxially to the longitudinal axis X-X' along the middle section of the nacelle.

In an embodiment, the plurality of air intakes is distributed in a plurality of circle arrays coaxially to the longitudinal axis X-X' along the middle section. In this particular embodiment, one circle array of air intakes is symmetrically distributed with respect to the longitudinal axis and along the circumference of the middle section of the nacelle.

In an embodiment, *the plurality of air intakes is circumferentially distributed along the middle section in an alternate Z-pattern.*

The provision of air intake distributed in an alternate Z-pattern means that there are two group of air intakes coaxially to the longitudinal axis X-X'. That is, there is a first plurality of air intakes and a second plurality of air intakes, so that the first plurality of air intakes is closer to the front section of the nacelle while the second plurality of air intakes is closer to the rear section of the nacelle. In addition, comparing these first and second plurality of air intakes, the air intakes of the first plurality are not aligned with the air intakes of the second plurality according to the direction provided by longitudinal axis X-X'.

In other words, the plurality of air intakes are distributed in an alternate Z-pattern when the plurality of air intakes is distributed in a plurality of circle arrays coaxially to the longitudinal axis X-X' along the middle section. Also, in this embodiment, one air intake of a first array is shifted with respect to the second array and is located in between two successive air intakes of said second array which results in the formation of the alternate Z-pattern. Preferably, the air intake of the first array is equidistant from the two successive air intakes of said second array. Respectively, one air intake of the second array is equidistant from two successive air intakes of the first array and shifted with respect to the first array.

In an embodiment, *the plurality of air intakes are distributed equidistant from each other along the middle section.*

Advantageously, this specific distribution of the air intakes ensures a homogeneous injection of the airflow captured at the channel inlet of the air intakes.

In an embodiment, *the channel inlet of the at least one air intake is triangular-shaped or rectangular-shaped.*

In an embodiment, *for the at least one air intake, the area of the channel inlet is greater than the area of the channel outlet.*

The greater the area of the channel inlet, the more quantity of airflow is captured and further channeled towards the compressor section.

Furthermore, by reducing the area of the channel outlet with respect to the area of the channel inlet, the conduct displayed between the channel inlet and the channel outlet as a substantially funnel shape which provides an acceleration of the airflow previous to the injection of said airflow inside the compressor section.

In an embodiment, *the at least one air intake comprises an upper wall extending from the channel inlet to the channel outlet and the upper wall is substantially U-shaped.*

The upper wall is substantially U-shaped, also called lip, thanks to the presence of a protrusion emerging at the edge of the channel inlet and further connecting to the channel outlet. Furthermore, the protrusion defined by the U-shaped upper wall substantially extends towards the opposite wall of the at least one air intake and helps reducing the section area of the conduct displayed inside the at least one air intake until reaching the smaller section area of the conduct which is the channel outlet area. That is, this protrusion defined by the U-shaped upper wall projects to the inside of the channel of each air intake.

Advantageously, a U-shaped upper wall increases the acceleration and decreases pressure losses of the airflow captured at the channel inlet.

In an embodiment, *the at least one air intake further comprises a lower wall, opposite to the upper wall, and the lower wall is substantially curved.*

The lower wall of the at least one air intake is substantially curved in order to provide a more pronounced aerodynamic profile to the overall air intake.

In an embodiment, the upper wall is substantially U-shaped and the lower wall is substantially curved. Advantageously, the at least one air intake having both of the previously mentioned features ensures an increase acceleration of the captured airflow and optimal conditions for injected said airflow into the compressor section.

In an embodiment, *the at least one air intakes is projected inwardly towards the inside of the middle section.*

By providing at least one air intake projected inwardly towards the inside of the middle section, this configuration helps directing the airflow towards the compressor section in an optimal manner, that is, by enabling the airflow to be supplied as directly and as close as possible to the compressor section so that air loss is diminished and as much quantity of captured airflow is transferred from the channel inlet to the compression inlet of the compressor section of the engine.

In an embodiment, *the nacelle is substantially elliptical-shaped.*

Advantageously, the nacelle is substantially elliptical-shaped so that the nacelle has an aerodynamic profile.

In a second inventive aspect, *the present invention provides an aircraft comprising at least one turbo-propeller engine partially covered by a nacelle according to any one of the preceding claims, wherein the turbo-propeller engine comprises a compressor section comprising a compressor airflow inlet.*

Advantageously, as the nacelle of the first inventive aspect of the invention provides a lighter overall architecture with respect to the nacelle known in the art, the invention also has other structural benefits such as reducing the weight of the overall aircraft structure which has to support the nacelle, for example the pylon. Also, the pylon structure takes advantage of the nacelle architecture of the first inventive aspect of the invention since it carries all the loads to the fuselage or wing depending on where the engines are attached.

In an embodiment, *the at least one air intake is directly connected to the compressor airflow inlet.*

In an embodiment, *the turbo-propeller engine further comprises a plenum compartment located between the channel outlets of the at least one air intake and the compressor airflow inlet, so that the channel outlet lead to the plenum compartment.*

The plenum compartment is located between the channel outlet of the at least one air intake and the compressor airflow inlet so that the airflow captured at the channel inlet of the at least one air intake is contained in an enclosed chamber. This plenum compartment is configured for maintaining the airflow entered at a specific pressure which is higher than the ambient pressure outside the nacelle and before injection of said airflow inside the compressor.

In an embodiment, the plenum has an annular shape distributed around the compressor from which said compressor collect the airflow previously captured at the channel inlet and stored inside the plenum at a specific pressure.

Advantageously, the plenum compartment helps stabilizing the pressure of the captured airflow and ensures an even distribution of said airflow inside the compressor section and before injection into the compressor by means of the compressor airflow inlet.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other features and advantages of the invention will be seen more clearly from the following detailed description of preferred embodiments provided only by way of illustrative and non-limiting examples in reference to the attached drawings.
- Figure 1A: This figure shows a perspective front view of a nacelle according to an embodiment of the invention.
- Figure 1B: This figure shows a perspective front view of a nacelle according to another embodiment of the invention.
- Figure 2: This figure shows a schematic cross section view of the nacelle of figure 1A.
- Figure 3: This figure shows a schematic view of one air intake according to an embodiment shown in figures 1A and 2.
- Figure 4: This figure shows a schematic top view of an aircraft comprising at least one nacelle according to an embodiment of the invention.

### DETAILED DESCRIPTION OF THE INVENTION

In the following, all the examples and embodiments further described correspond to a nacelle (1) for a turbo-propeller engine (11) of an aircraft (10) and an aircraft (10) comprising any embodiment of the nacelle (1) further described.

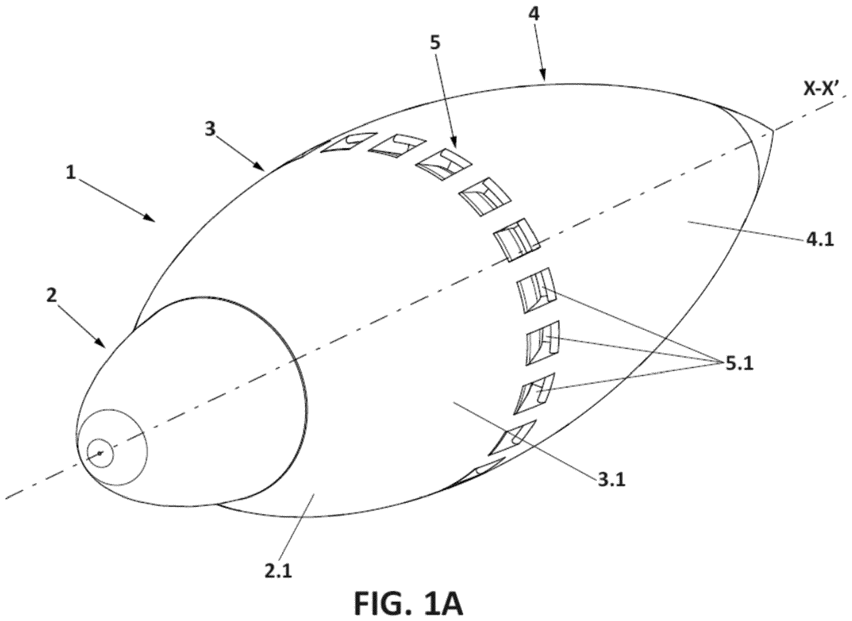

Figures 1A-1B show a schematic view of a nacelle (1) for a turbo-propeller engine of an aircraft comprising a front section (2), a middle section (3) and a rear section (4). These sections (2, 3, 4) of the nacelle (1) are arranged coaxially to a longitudinal axis X-X'. In an embodiment, this longitudinal axis X-X' coincides with the centerline of the turbo-propeller engine when installed in the nacelle (2).

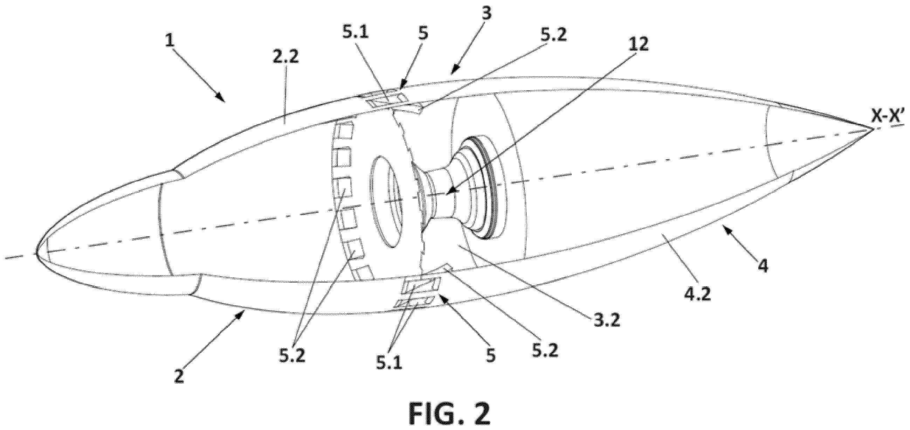

In the embodiment of figure 1A, the middle section (3) of the nacelle comprises a plurality of air intakes (5) so that the air intakes (5) are coincident to a compressor section (12) of the turbo-propeller engine (11) when installed in the nacelle (1) (as shown in figure 2).

In the embodiment of figure 1A, the plurality of air intakes (5) is distributed coaxially to the longitudinal axis X-X' along the middle section (3) of the nacelle (1). Also, the nacelle (1) shows a single array of air intakes (5) arranged at the middle section (3) of said nacelle (1).

In other embodiments, not shown in the set of figures, the nacelle (1) comprises at least two arrays of air intakes (5) arranged along the middle section and coaxially to the longitudinal axis X-X'. In some particular embodiments (not shown), the plurality of air intakes (5) comprises at least two arrays of air intakes (5) and is circumferentially distributed along the middle section (3) in an alternate Z-pattern.

In figure 1A, each air intake (5) defines a channel comprising a channel inlet (5.1) and a channel outlet (not shown), the channel inlet (5.1) being on the outermost part (3.1) of the middle section (3) and the channel outlet (not shown) being on the inside (3.2) of the middle section (3). This plurality of air intakes (5) is configured for capturing and channeling airflow from the outside of the nacelle (1) towards the compressor section of the turbo-propeller engine (11) inside the nacelle (1).

Also, the nacelle (1) of figure 1A shows that the air intakes (5) are distributed equidistant from each other along the middle section (3).

In this embodiment shown in figure 1A, the channel inlets (5.1) of the plurality of air intakes (5) are substantially rectangular-shaped.

In other embodiments, not shown in the set of figures, the channel inlets (5.1) of the plurality of air intakes (5) are triangular-shaped.

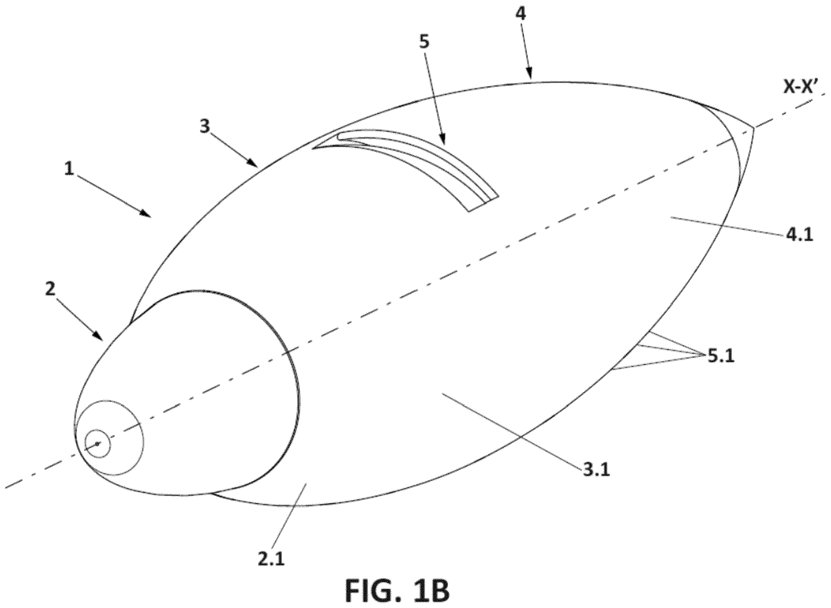

In the embodiment of figure 1B, the nacelle (1) comprises a top portion and a bottom portion and one air intake (5) located on the top portion of the nacelle and coincident to a compressor section (12) of the turbo-propeller engine (11) when installed in the nacelle (1). Also, the air intake (5) shown in figure 1B is distributed along the top portion of the nacelle (1) as an elongated slot with a substantially rectangular form and being circumferentially extended relative to the longitudinal axis X-X'.

In an embodiment, not shown in figure 1A or 1B, the length of the channel defined by the at least one air intake (5) is equal to the thickness of the nacelle (1). In a particular embodiment, the at least one air intake (5) is a hole.

Figure 2 shows a cross-section view along the longitudinal axis X-X' of an embodiment of the nacelle (1) of the invention shown in figure 1A. As shown in this figure 2, the nacelle (1) comprises a plurality of air intakes (5) which are projected inwardly towards the inside (3.2) of the middle section (3) of the nacelle (1). In particular, the channel outlets (5.2) are directed towards the compressor section (12) so that the airflow injection is further optimized.

In some embodiments, as the ones shown in figures 1A to 3, the nacelle (1) is substantially elliptical-shaped which provide an aerodynamic profile to said nacelle (1) and an increased airflow intake while in-flight.

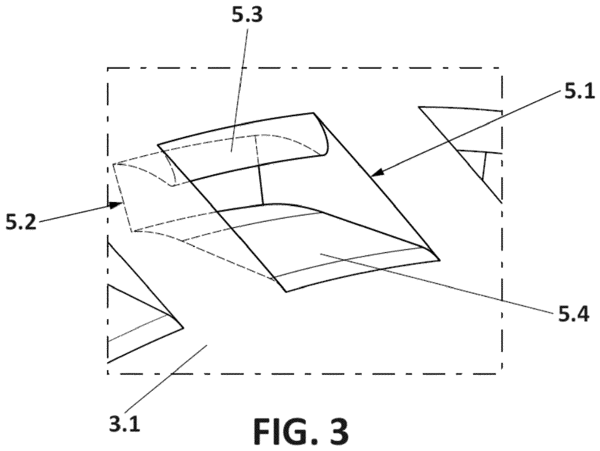

Figure 3 shows a detailed schematic view of an air intake (5), said air intake (5) is one embodiment of the plurality of air intake (5) which can be implemented to the nacelle (1) of the present invention.

In an embodiment, as the one shown in figure 3, the channel inlet (5.1) of the at least one air intake (5) is substantially rectangular-shaped.

In an embodiment, as the one shown in figure 3, the channel outlet (5.2) of the at least one of air intake (5) is substantially rectangular-shaped.

In an embodiment, as the one shown in figure 3, both the channel inlet (5.1) and the channel outlet (5.2) of the at least one air intake (5) are substantially rectangular-shaped.

Figure 3 depicts the conduct displayed between the channel inlet (5.1) and the channel outlet (5.2) in one air intake (5). Said conduct displayed between the channel inlet (5.1) and the channel outlet (5.2) is substantially funnel-shaped which provides an acceleration of the airflow previous to the injection of said airflow inside the compressor section (12).

In an embodiment of the air intakes (5), as the one shown in figure 3, the area of the channel inlet (5.1) is greater than the area of the channel outlet (5.2). Said reduction of the area from channel inlet (5.1) to the channel outlet (5.2) provides the funnel shape to the conduct displayed between said channel inlet (5.1) and said channel outlet (5.2).

Also in the embodiment of figure 3, the air intake (5) has an upper wall (5.3) and a lower wall (5.4), opposite to the upper wall (5.3). The upper wall (5.3) extends from the channel inlet (5.1) to the channel outlet (5.2) and is substantially U-shaped. The protrusion resulting from the U-shaped upper wall (5.3) is located close to the channel inlet (5.1) which provokes an abrupt reduction of the area when the airflow is captured at the channel inlet (5.1) and said airflow enters in contact with the U-shaped upper wall (5.3). Therefore, the U-shaped upper wall (5.3) ensures an acceleration of the airflow captured at the channel inlet (5.1) so that said airflow is projected towards the channel outlet (5.2) and further towards the compressor section (12) of the turbo-propeller engine (11) when installed in the nacelle (1).

In an embodiment, as the one shown in figure 3, the lower wall (5.4) of the air intake (5) is substantially curved.

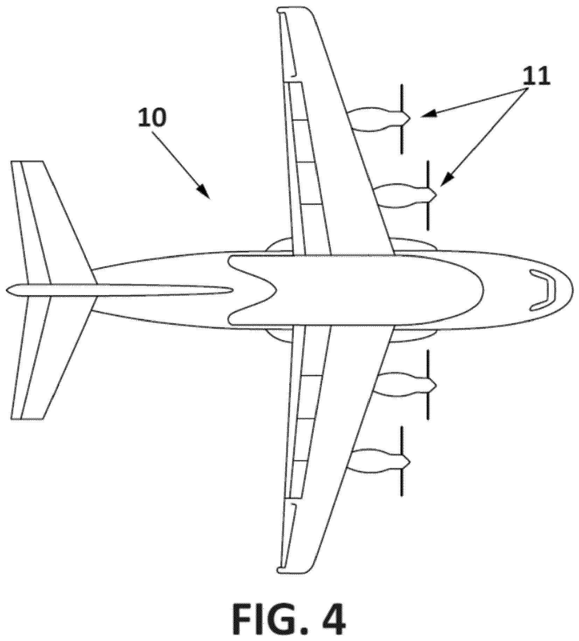

Figure 4 depicts and embodiment of an aircraft (10) comprising turbo-propeller engines (11) partially covered by a nacelle (1) of the present invention according to any embodiment previously depicted.

In an embodiment, the turbo-propeller engine (11) comprises a compressor section (not shown) and said compressor section further comprises a compressor airflow inlet.

In an embodiment, the at least one air intake (5) of the nacelle (1) is directly connected to the compressor airflow inlet in order to optimize and reduces losses of captured airflow at the channel inlet (5.1) of the at least one air intake (5).

In an embodiment, the turbo-propeller engine (11) further comprises a plenum compartment located between the channel outlets (5.2) of the at least one air intake (5) and the compressor airflow inlet of the compressor section (12), so that the channel outlets (5.2) lead to the plenum compartment. By implementing the plenum compartment between the at least one air intake (5), more particularly downstream the channel outlets (5.2), and the compressor airflow inlet, the airflow captured at the channel inlet (5.1) of the at least one air intake (5) is contained in the plenum compartment. This plenum compartment is configured for maintaining the captured airflow at a specific pressure which is higher than the ambient pressure outside of the nacelle (1) and before injection of said airflow inside the compressor. Additionally, this plenum compartment helps stabilizing the pressure of the captured airflow and ensures an even distribution of said airflow inside the compressor section (12) and before injection into the compressor by means of the compressor airflow inlet.

## Claims

1. A nacelle (1) for a turbo-propeller engine (11) of an aircraft (10), the nacelle (1) comprising:
a front section (2),
a middle section (3), and
a rear section (4),
these sections (2, 3, 4) of the nacelle (1) being arranged coaxially to a longitudinal axis X-X' coinciding with a centerline of the turbo-propeller engine (11) when installed in the nacelle (1);
wherein
the middle section (3) of the nacelle comprises at least one air intake (5) so that the at least one air intake (5) is coincident to a compressor section (12) of the turbo-propeller engine (11) when installed in the nacelle (1);
the at least one air intake (5) defines a channel comprising a channel inlet (5.1) and a channel outlet (5.2), the channel inlet (5.1) being on the outermost part (3.1) of the middle section (3) and the channel outlet (5.2) being on the inside (3.2) of the middle section (3); and
the at least one air intake (5) is configured for capturing and channeling airflow from the outside of the nacelle (1) towards the compressor section (12) of the turbo-propeller engine (11).

2. The nacelle (1) according to claim 1, wherein the at least one air intake (5) is distributed coaxially to the longitudinal axis X-X' along the middle section (3).

3. The nacelle (1) according to the preceding claim, wherein the nacelle (1) comprises a top portion and a bottom portion, and wherein the at least one air intake (5) is distributed along the top portion of the nacelle (1).

4. The nacelle (1) according to any one of the preceding claims, wherein the channel inlet (5.1) of the at least one air intake (5) is triangular-shaped or rectangular-shaped.

5. The nacelle (1) according to any one of the preceding claims, wherein for the at least one air intake (5), the area of the channel inlet (5.1) is greater than the area of the channel outlet (5.2).

6. The nacelle (1) according to any one of the preceding claims, wherein the at least one air intake (5) comprises an upper wall (5.3) extending from the channel inlet (5.1) to the channel outlet (5.2) and the upper wall (5.3) is substantially U-shaped.

7. The nacelle (1) according to the preceding claim, wherein the at least one air intake (5) further comprises a lower wall (5.4), opposite to the upper wall (5.3), and the lower wall (5.4) is substantially curved.

8. The nacelle (1) according to any one of the preceding claims, wherein the at least one air intake (5) is projected inwardly towards the inside (3.2) of the middle section (3).

9. The nacelle (1) according to any of the preceding claims, wherein the nacelle (1) comprises a plurality of air intakes (5).

10. The nacelle (1) according the preceding claim, wherein the plurality of air intakes (5) is circumferentially distributed along the middle section (3) in an alternate Z-pattern.

11. The nacelle (1) according to any of claim 9 or 10, wherein the plurality of air intakes (5) are distributed equidistant from each other along the middle section (3).

12. The nacelle (1) according to any one of the preceding claim is substantially elliptical-shaped.

13. An aircraft (10) comprising at least one turbo-propeller engine (11) partially covered by a nacelle (1) according to any one of the preceding claims, wherein the turbo-propeller engine (11) comprises a compressor section (12) comprising a compressor airflow inlet.

14. The aircraft (10) according to the preceding claim, wherein the at least one air intake (5) is directly connected to the compressor airflow inlet.

15. The aircraft (10) according to claim 14, wherein the turbo-propeller engine (11) further comprises a plenum compartment located between the channel outlet (5.2) of the at least one air intake (5) and the compressor airflow inlet, so that the channel outlet (5.2) lead to the plenum compartment.
